(19) Europäisches Patentamt / European Patent Office / Office européen des brevets

(11) **EP 3 694 649 B1**

(12) **FASCICULE DE BREVET EUROPEEN**

(45) Date de publication et mention de la délivrance du brevet:
**05.01.2022 Bulletin 2022/01**

(21) Numéro de dépôt: **18782759.7**

(22) Date de dépôt: **11.10.2018**

(51) Int Cl.:
**B03C 3/06** *(2006.01)*   **B03C 3/155** *(2006.01)*
**G01N 15/02** *(2006.01)*

(86) Numéro de dépôt international:
**PCT/EP2018/077804**

(87) Numéro de publication internationale:
**WO 2019/073009 (18.04.2019 Gazette 2019/16)**

(54) **METHODE ET DISPOSITIF DE TRI DE FIBRES EN SUSPENSION DANS UN AEROSOL PAR LA COMBINAISON DE FORCES ELECTROSTATIQUES ET CENTRIFUGE**

VERFAHREN UND VORRICHTUNG ZUM SORTIEREN VON IN EINEM AEROSOL SUSPENDIERTEN FASERN UNTER VERWENDUNG KOMBINIERTER ELEKTROSTATISCHER UND ZENTRIFUGALER KRÄFTE

SORTING METHOD AND DEVICE FOR FIBRES SUSPENDED IN AN AEROSOL, USING COMBINED ELECTROSTATIC AND CENTRIFUGAL FORCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2017 FR 1759588**

(43) Date de publication de la demande:
**19.08.2020 Bulletin 2020/34**

(73) Titulaire: **Commissariat à l'Energie Atomique et aux Energies Alternatives**
**75015 Paris (FR)**

(72) Inventeurs:
- **CLAVAGUERA, Simon**
  **38000 Grenoble (FR)**
- **POURPRIX, Michel**
  **91310 Montlhery (FR)**
- **TARDIF, François**
  **38250 Lans En Vercours (FR)**

(74) Mandataire: **Nony**
**11 rue Saint-Georges**
**75009 Paris (FR)**

(56) Documents cités:
| | |
|---|---|
| WO-A2-96/06341 | KR-B1- 101 179 039 |
| KR-B1- 101 179 039 | US-A- 5 428 220 |
| US-A1- 2003 213 366 | US-A1- 2004 050 756 |

**Description**

Domaine technique

La présente invention concerne le domaine du tri de micro et nano fibres dans un aérosol susceptible de contenir des fibres de tailles différentes et éventuellement des particules non fibreuses.

Elle concerne plus particulièrement la réalisation de dispositifs électrodynamiques pour mettre en oeuvre un tel tri.

La présente invention vise à augmenter la sélectivité des analyseurs et des dispositifs de tri de particules fibreuses d'origine minérale (céramiques, verre, nanotubes de carbone, nanofils métalliques ...), organique ou biologique (cellules, bactéries, virus ...), en temps réel.

Elle vise également à augmenter les performances des méthodes existantes de détection et de mesure en continu en temps réel de concentrations de fibres d'amiantes mises en oeuvre notamment dans les ambiances fortement empoussiérées.

Elle vise aussi à améliorer les performances des méthodes classiques de collecte sur filtre puis post analyse par microscopie.

Une des applications visées par l'invention est le tri de fibres d'amiante dans un aérosol susceptible de contenir des particules quelconques, non fibreuses.

Par « fibres d'amiante», on entend la définition et la catégorisation données par l'Organisation Mondiale de la Santé, comme suit :

- les fibres «OMS » d'amiante caractérisées par $L \geq 5\mu m$, $0,2 < d < 3\ \mu m$, rapport $L/d \geq 3$,
- les fibres courtes d'amiante (FCA) avec $0,5 < L < 5\ \mu m$, $d < 3\ \mu m$, $L/d \geq 3$,
- les fibres fines d'amiante (FFA) avec $L \geq 5\ \mu m$, $d < 0,2\ \mu m$ et $L/d \geq 3$,

où L et d représentent respectivement la longueur et le diamètre.

Bien que décrit préférentiellement en référence à l'application de sélection des fibres d'amiante, l'invention s'applique au tri de tout type de particules fibreuses et pour diverses applications.

Etat de la technique

La règlementation relative aux modalités de mesurage du niveau d'empoussièrement, notamment de fibres d'amiante, est claire, stricte et de plus en plus contraignante. Par exemple en France, la réglementation a récemment abaissé la valeur limite d'exposition professionnelle (VLEP) à 10 fibres par litre d'air inhalé sur huit heures de travail.

Pour mesurer la concentration en nombre de fibres dans l'air, on procède à ce jour par prélèvement sur membrane ou au moyen d'appareils à lecture directe.

Quel que soit le mode de prélèvement, un problème majeur est toujours rencontré dans le cas d'ambiances très empoussiérées. Il s'agit de la difficulté de compter exclusivement les fibres car, des particules de toutes sortes et origines (huile, ciment, peintures, ...) sont également présentes et peuvent perturber ou masquer les mesures.

En effet, notamment les opérations de curage et de désamiantage lors des processus de déconstruction ou de rénovation (bâtiment, matériel roulant ...) mettent en oeuvre des surfaces sur lesquelles de multiples matériaux ont été déposés sur de très longues périodes. Il est donc particulièrement délicat de discriminer un faible nombre de fibres dans un environnement très fortement chargé en particules.

Compte tenu du faible nombre de fibres à compter, un certain nombre de dispositifs décrits dans la littérature ne sont plus pertinents aujourd'hui, en particulier du fait de leurs limites de détection.

En physique des aérosols, il est connu qu'en l'absence de champ électrique dans un espace ionisé unipolaire, les particules d'aérosol en suspension dans cet espace vont acquérir une charge électrique par le mécanisme de charge électrique par diffusion d'ions unipolaires à leur surface.

Un état d'équilibre va alors s'établir, la charge acquise par les particules dépendant notamment du produit Ni*t, où Ni représente la concentration en ions et t le temps de séjour des particules dans l'espace ionisé.

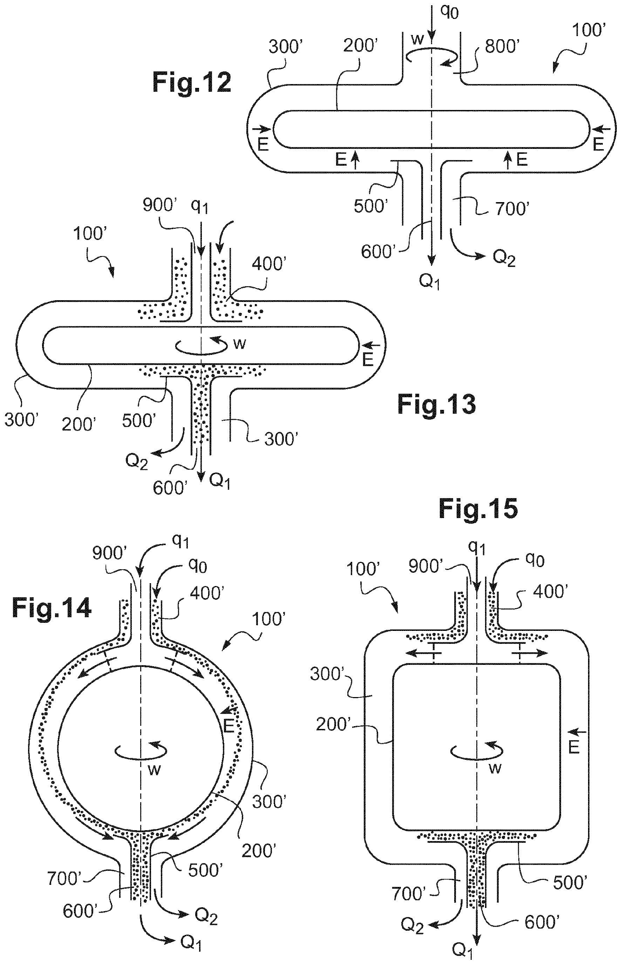

Au final, pour un produit Ni*t donné, il en résulte que la mobilité électrique acquise par ces particules, dans un mode de charge uniquement par diffusion d'ions, est d'autant plus grande que les particules seront plus fines. Ceci est illustré notamment par la figure 15.4 de la page 330 de la publication [1].

A contrario, il a été largement mis en évidence que le résultat est inverse pour des particules sous la forme de fibres chargées uniquement par diffusion d'ions unipolaires. Ainsi, la publication [2] montre que pour des fibres de diamètre donné, plus les fibres sont longues, plus leur mobilité électrique est élevée.

Cette propriété est mise à profit pour classifier des aérosols fibreux carbonés: étude [3]. Cette étude a été complétée quelques années plus tard par la même équipe en y décrivant des fibres de carbone et des fibres de verre :

voir publication [4]. En particulier, ils se sont intéressés à la mobilité électrique de fibres de carbone de diamètre égal à 3,74$\mu$m, en fonction de leur longueur, pour un produit Ni*t égal à 1,9*10$^7$ s/cm$^3$.

Les auteurs de la publication [5] ont également montré par le calcul le résultat inverse précité pour les fibres. Plus précisément, pour arriver à ce résultat, ces auteurs ont calculé la mobilité électrique de particules fibreuses de diamètre égal à 1 $\mu$m pour différentes longueurs de fibres égales respectivement à 3 $\mu$m, 10 $\mu$m et 20 $\mu$m, chargées uniquement par diffusion d'ions unipolaires. Ils démontrent aussi qu'à diamètre de fibres constant, la mobilité électrique des fibres est d'autant plus élevée que leur longueur est grande.

En outre, les auteurs de cette publication [5] montrent qu'il est possible de mettre en pratique cette particularité pour séparer les fibres par rapport aux autres particules en suspension dans un aérosol. Pour ce faire, ils préconisent l'utilisation en série de deux séparateurs, à savoir un premier séparateur aérodynamique pour réaliser une sélection selon la taille des particules par centrifugation, sédimentation ou inertie, et en aval du premier séparateur, un second séparateur mais de nature électrostatique pour sélectionner les fibres selon leur longueur.

Des travaux antérieurs mettent en avant le même principe physique et décrivent la séparation et le dépôt de particules fibreuses sur un substrat poreux : voir publications [6] et [7] du même auteur.

D'autres travaux qui mettent en oeuvre un principe physique distinct de ceux décrits précédemment, se sont intéressés à la même problématique de séparation de particules fibreuses. Dans ces autres travaux, les particules sont neutralisées électriquement par une source radioactive et seule leur polarisation dans un champ électrique (diélectrophorèse) permet de les classer selon leur longueur. La famille de ces dispositifs porte le nom de « classifieur de fibres Baron » (en anglais « Baron Fiber Classifier ») en référence aux travaux de l'équipe du chercheur P.A. Baron : voir publication [8].

Dans un classifieur de fibres Baron, la conductivité des fibres et un prérequis pour permettre un tri efficace. Néanmoins, il semblerait que pour des niveaux d'humidité significatifs, typiquement supérieurs à 30%, l'eau condensée à la surface des fibres produit une couche conductrice qui permettrait de pallier aux problèmes de fibres non-conductrices: voir publication [9].

Une évaluation de ce type de dispositifs a été effectuée par la même équipe du chercheur Baron, par simulation en mécanique des fluides numérique (MFN), (terme anglais « Computational Fluid Dynamics » d'acronyme CFD): voir publication [10]. Il ressort de cette évaluation que ce type de dispositifs est limité aux fibres courtes.

Enfin, une amélioration récente de ce type de dispositifs a été proposée pour générer de grandes quantités de fibres triées pour des études de toxicologie : voir publication [11].

Le brevet US7931734B2 divulgue un système comprenant deux analyseurs différentiels de mobilité électrique (DMA) en série, qui permet, d'après les inventeurs, la séparation de fibres et de particules selon leurs charges. Pour rappel, un DMA est un instrument capable de séparer des particules selon leur mobilité électrique en sélectionnant pour une tension donnée une classe de mobilité électrique donnée.

Les demande de brevet WO 2013/058429A1 et brevets KR 101558480B1 et KR101322689B1 divulguent des dispositifs de séparation de fibres dans la forme générale toroïdale, qui mettent en oeuvre le processus de charge des aérosols par diffusion d'ions unipolaires. Dans ces documents, il est mentionné que les effets électriques deviennent prépondérants dans la géométrie toroïdale décrite du fait que la vitesse d'écoulement diminue au fur et à mesure que l'on s'éloigne de l'axe du dispositif alors que la vitesse de dérive due au champ électrique reste constante.

Dans le domaine général des particules chargées électriquement, des travaux ont porté sur l'utilisation d'autres forces en plus d'un champ électrique, pour l'entraînement et la séparation des particules.

Tout d'abord, le champ de gravité a été mis à profit en sus d'un champ électrique.

Ainsi, le brevet US6012343B divulgue un analyseur DMA de type à écoulement radial qui met en série deux sélecteurs de mobilité électrique dite circulaire et dans lequel l'extraction des particules du sélecteur amont vers le sélecteur aval est réalisée par une fente en mettant à profit à la fois les champs électrique et de gravité.

Il a aussi été mis en oeuvre l'utilisation combinée d'une force centrifuge et d'un champ électrique.

Le premier instrument se rapportant à cette utilisation combinée force centrifuge/champ électrique est divulgué dans brevet JP07055689, dont les résultats sont donnés dans la publication [12].

Dans cet instrument, les particules chargées électriquement circulent en écoulement laminaire entre deux cylindres concentriques tournant à la même vitesse. Pour faire en sorte que les particules tournent bien à la même vitesse que les cylindres, ce qui est essentiel pour un fonctionnement optimal, le flux d'air longitudinal est canalisé par des guides espaceurs isolants positionnés entre les deux cylindres. Ces espaceurs ont également pour fonction le maintien mécanique coaxial des cylindres entre eux. Un champ électrique est établi entre les cylindres, de sorte que les particules sont soumises d'une part à une force centrifuge proportionnelle à leur masse, d'autre part à une force centripète proportionnelle à leur charge électrique. Les particules qui sortent des cylindres ont ainsi la même caractéristique combinée masse et charge. En mesurant la charge d'une particule, on peut donc en déduire sa masse.

Ce type d'instrument est commercialisé par la société KANOMAX sous la dénomination « Model 3602 APM-II).

Une amélioration a été apportée à cet instrument d'analyse: voir publication [13]. L'amélioration consiste à faire tourner légèrement plus vite le cylindre intérieur par rapport au cylindre extérieur pour mieux équilibrer radialement les forces électrique et centrifuge.

L'appareil commercialisé par la société CAMBUSTION sous la dénomination « Model Centrifugal Particle Mass Analyser » met en oeuvre cette amélioration.

De fait, il ressort de l'étude de l'état de l'art qu'il n'a pas été proposé de dispositif permettant de séparer efficacement et simplement des fibres entre elles ou vis-à-vis de particules non fibreuses contenues dans un aérosol.

Or, il existe un besoin pour un tel dispositif afin de trier en continu des particules fibreuses entre elles et non fibreuses (en minimisant les dépôts de particules d'intérêt sur les parois) dans le cadre de procédés industriels ou pour augmenter la sélectivité d'analyseurs de fibres en temps réel existants, notamment en réduisant la part de détection liée aux particules non fibreuses susceptibles de masquer le comptage des fibres.

Le but général de l'invention est alors de répondre au moins en partie à ce besoin.

Exposé de l'invention :

Pour ce faire, l'invention a tout d'abord pour objet, une méthode de tri, de préférence en continu, de micro et nano fibres en suspension dans un aérosol susceptible de contenir des fibres de tailles différentes et éventuellement des particules non fibreuses, comprenant les étapes suivantes:

a/ charge des particules en suspension dans l'aérosol, par diffusion d'ions unipolaires ;

b/ application d'un champ électrique uniforme entre deux surfaces de révolution électriquement conductrices, agencées avec leur axe à la verticale et en définissant entre eux un espace; le champ électrique uniforme étant dirigé de la surface extérieure vers la surface intérieure;

c/ introduction d'un flux d'aérosol depuis une entrée sur le dessus entre les deux surfaces de révolution; l'écoulement du flux d'air étant non turbulent dans l'espace entre surfaces de révolution; le flux d'air circulant depuis une entrée sur le dessus entre les deux surfaces de révolution jusqu'à une sortie sur le dessous, délimité par un tube agencé sur le dessous entre les deux surfaces de révolution;

c'/ simultanément à l'étape c/, mise en rotation à une vitesse donnée des surfaces de révolution et du tube de sortie ;

d/ récupération de la partie de flux d'air chargée en fibres et circulant à l'intérieur du tube de sortie; les fibres récupérées dans la partie de flux d'air étant séparées des particules non fibreuses initialement présentes dans l'aérosol et éjectées par la force centrifuge à l'extérieur du tube de sortie.

Dans le cas de fibres suffisamment pesantes, telles que les fibres OMS d'amiante, les inventeurs pensent que la mise en oeuvre de la méthode selon la demande de brevet intitulée « *Méthode et dispositif de tri de fibres en suspension dans un aérosol par la combinaison de forces électrostatiques et de gravité»* et déposée le même jour que la présente demande, est suffisante, comme il a été montré par des calculs analytiques, détaillés par la suite.

En revanche, dans les autres cas, les inventeurs ont pensé que les forces de gravité pourraient s'avérer trop faibles pour assurer une sélection efficace de fibres de différents facteurs de forme, telles que des fibres d'amiante FCA et des FFA.

Ainsi, ils ont pensé à soumettre les particules non plus à la force de pesanteur mais à une force centrifuge, tout en les soumettant à nouveau à une force électrique antagoniste.

A titre d'ordres de grandeur, une particule de masse M tournant à une vitesse angulaire $\omega$ égale à 420 tours/min sur un rayon R égal à 5 cm, est soumise à une force centrifuge FC égale à $M*\omega^2*R$, avec $\omega$ en radian/s, R en mètre, M en kg, FC en Newton. Soit avec les données numériques précitées, une force FC égale à $M \times 96,8$ m/s$^2$.

Par comparaison, la force de gravité qui s'exerce sur cette particule sera P égale à $M*g$, où g = 9,8 m/s$^2$.

On voit donc que, dans ce cas, la force centrifuge équivaut à environ 10 fois la force de gravité. Comme cette force varie avec le carré de la vitesse angulaire, une vitesse $\omega$ de 1400 t/min par exemple conduira à une force centrifuge d'environ 100 fois la force de gravité. Ce qui offre donc une opportunité intéressante pour séparer des fibres de faible masse par rapport à des particules non fibreuses.

Selon un mode de réalisation avantageux, la méthode comprend en outre une étape d'/ simultanée à l'étape d/, selon laquelle on récupère la partie de flux d'air chargée en particules non fibreuses et circulant à l'intérieur du tube de sortie

Selon une variante, avec des surfaces de révolution ainsi que le tube de sortie qui sont des cylindres, méthode selon laquelle :

- l'étape c/ est réalisée par introduction de l'aérosol dans une fente d'entrée agencée dans l'espace entre cylindres et par circulation d'un flux axial d'air filtré introduit de part et d'autre de la fente à co-courant du flux d'aérosol ;
- l'étape d/ est réalisée par récupération de la partie du flux d'air chargée en fibres à l'intérieur du tube de sortie ;
- le cas échéant, l'étape d'/ est réalisée par récupération de la partie du flux d'air chargée en particules non fibreuses à l'intérieur du tube de sortie.

Selon une autre variante, avec les surfaces de révolution qui sont des disques évidés à bord circulaire concave, agencés à l'horizontal en définissant entre eux un espace; l'entrée étant un conduit réalisé dans le prolongement axial du disque extérieur sur le dessus de celui-ci; le tube de sortie étant constitué d'une première portion séparant l'espace entre disques en deux, prolongée d'une portion cylindrique selon l'axe de révolution:

- l'étape c/ est réalisée par introduction de l'aérosol dans le conduit d'entrée;
- l'étape d/ est réalisée par récupération de la partie du flux d'air chargée en fibres à l'intérieur du tube de sortie ;
- le cas échéant, l'étape d'/ est réalisée par récupération de la partie du flux d'air chargée en particules non fibreuses à l'intérieur du tube de sortie.

L'invention a également pour objet un dispositif pour la mise en oeuvre de la méthode de tri décrite ci-avant, comprenant :

- deux surfaces de révolution, électriquement conductrices, agencées avec leur axe à la verticale et en définissant entre eux un espace;
- des moyens pour appliquer un champ électrique uniforme entre les deux surfaces, le champ étant dirigé de la surface extérieure vers la surface intérieure;
- des moyens pour introduire un flux d'aérosol de fibres en suspension dans un aérosol susceptible de contenir des particules non fibreuses, depuis une entrée sur le dessus entre les deux surfaces de révolution;
- des moyens pour mettre en rotation à une vitesse donnée les deux surfaces de révolution ainsi qu'un tube de sortie agencé sur le dessous entre les deux surfaces de révolution ;
- des moyens pour récupérer la partie de flux d'air chargée en fibres, à l'intérieur du tube de sortie.

Selon un mode de réalisation avantageux, le dispositif comprend en outre des moyens pour récupérer la partie du flux d'air chargée en particules non fibreuses à l'intérieur du tube de sortie.

Selon une variante, les deux surfaces de révolution sont des cylindres coaxiaux, l'entrée étant une fente agencée dans l'espace entre cylindres, le tube de sortie étant un cylindre.

Selon une autre variante, les deux surfaces de révolution sont deux disques à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; le tube de sortie étant constitué d'une première portion séparant l'espace entre disques en deux, prolongée d'une portion cylindrique selon l'axe de révolution.

L'invention a enfin pour objet l'utilisation d'une méthode décrite ci-avant et/ou d'un dispositif décrit précédemment pour la détection et la mesure de concentration en nombre de fibres, en particulier de fibres d'amiantes, dans l'air, notamment dans un environnement empoussiéré.

La méthode et le dispositif selon l'invention sont particulièrement adaptés à la détection et mesure de concentrations en fibres courtes d'amiante (FCA) et/ou en fibres fines d'amiante (FFA). Toutefois, la méthode et le dispositif selon l'invention peuvent être utilisés la détection et mesure de concentrations en fibres OMS d'amiante.

On peut utiliser la méthode et/ou réaliser l'intégration du dispositif selon l'invention en amont d'un système de mesure en temps réel des concentrations de fibres d'amiante dans l'air, notamment pour mesurer en continu les concentrations et leurs variations dans le temps.

Description détaillée

D'autres avantages et caractéristiques ressortiront mieux à la lecture de la description détaillée, faite à titre illustratif et non limitatif, en référence aux figures suivantes parmi lesquelles:

- la figure 1 est une vue schématique en coupe longitudinale d'un dispositif de tri de fibres à plaques planes selon la demande de brevet intitulée « *Méthode et dispositif de tri de fibres en suspension dans un aérosol par la combinaison de forces électrostatiques et de gravité* » et déposée le même jour que la présente demande;
- la figure 2 reprend la figure 1 et indique les paramètres de dimension et de vitesses entrant dans le calcul de trajectoires des particules circulant entre les plaques planes;
- la figure 3 schématise, en fonction de différents valeurs d'élancement de fibres, (rapport longueur/diamètre), les différentes trajectoires suivies par les fibres circulant dans le dispositif de la figure 1;
- la figure 4 représente une synthèse, en fonction de différentes valeurs d'élancement, des différentes trajectoires suivies à la fois par les fibres et les particules non fibreuses de volume équivalent contenues dans un même aérosol, circulant dans le dispositif de la figure 1;
- la figure 5 est une vue schématique en coupe longitudinale d'une première variante d'un dispositif selon la figure 1 ;
- la figure 6 est une vue schématique en coupe longitudinale d'une deuxième variante d'un dispositif selon la figure 1;

- la figure 7 est une vue schématique en coupe longitudinale d'une troisième variante d'un dispositif selon la figure 1;
- la figure 8 est une vue schématique en coupe longitudinale d'une quatrième variante d'un dispositif selon la figure 1;
- la figure 9 est une vue schématique en coupe longitudinale d'une cinquième variante d'un dispositif selon la figure 1;
- la figure 10 est une vue schématique en coupe longitudinale d'une sixième variante d'un dispositif selon la figure 1;
- la figure 11 est une vue schématique en coupe longitudinale d'un dispositif de tri de fibres à plaques planes selon l'invention;
- la figure 11A est une vue schématique en coupe transversale du dispositif selon la figure 11;
- la figure 11B est une vue schématique en perspective et en coupe longitudinale partielle du dispositif selon la figure 11;
- la figure 12 est une vue schématique en coupe longitudinale d'une variante d'un dispositif selon l'invention;
- la figure 13 est une variante avantageuse du dispositif selon la figure 12 ;
- la figure 14 est une vue schématique en coupe longitudinale d'un dispositif de tri de fibres à géométrie sphérique selon l'invention;
- la figure 15 est une vue schématique en coupe longitudinale d'un dispositif de tride fibres à géométrie cylindrique selon l'invention.

Dans l'ensemble de la présente demande, les termes « vertical », « inférieur », « supérieur », « bas », « haut », « dessous », « dessus », « hauteur » sont à comprendre par référence par rapport à un dispositif de séparation selon l'invention agencé à l'horizontal ou à la verticale.

De même, les termes « entrée », « sortie », « amont » et « aval » sont à comprendre par référence par rapport au sens du flux d'aérosol dans un dispositif selon l'invention. Ainsi, l'entrée désigne une zone du dispositif par lequel l'aérosol contenant les fibres et les particules non fibreuses est introduit tandis que celui de sortie désigne celui par lequel le flux d'air chargé uniquement en fibres est évacué.

Par souci de clarté, les mêmes éléments des dispositifs de tri selon les exemples illustrés des deux alternatives sont désignés par les mêmes références numériques.

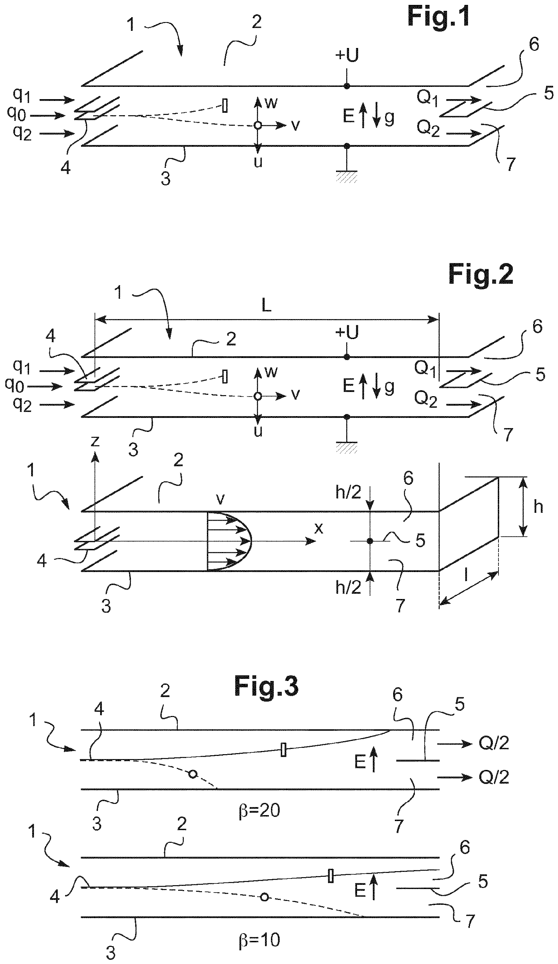

On a représenté en figure 1, un exemple de dispositif 1 pour le tri de fibres et de particules non fibreuses contenues initialement dans un aérosol. Ce dispositif 1 est selon la demande de brevet intitulée « *Méthode et dispositif de séparation avec utilisation de la gravité, de fibres en suspension dans un aérosol susceptible de contenir des particules non fibreuses»* et déposée le même jour que la présente demande.

On précise que préalablement avant l'introduction de l'aérosol dans le dispositif 1, les particules de l'aérosol sont chargées négativement par diffusion d'ions unipolaires.

Le dispositif de tri 1 comprend tout d'abord deux plaques 2, 3 planes, parallèles, agencées à l'horizontal. Ces plaques 2,3 sont électriquement conductrices.

A une extrémité longitudinale des plaques 2, 3 est agencée une fente d'entrée 4, au milieu de l'espace entre plaques, c'est-à-dire que le milieu de la fente 4 est à la moitié de la hauteur h de l'espace entre plaques 2, 3. La fente 4 peut par exemple être réalisée par deux plaques également planes et parallèles entre elles mais sur une hauteur bien moindre que l'espace entre plaques 2, 3.

A l'autre extrémité longitudinale, est agencée une paroi de séparation 5 également au milieu de l'espace entre plaques 2,3. Cette paroi 5 délimite donc avec la plaque du dessus 2, un canal 6 tandis qu'elle délimite avec la plaque du dessous 3, un canal 7.

On génère un champ électrique E, de préférence uniforme et de préférence d'intensité constante entre les plaques 2, 3, le champ E étant dirigé du bas vers le haut. Pour ce faire, par exemple, la plaque inférieure 3 est portée au potentiel zéro, tandis que la plaque supérieure 2 est au potentiel +U. Dans le cadre de l'invention, on peut tout à fait envisager l'inverse, c'est-à-dire des particules chargées positivement avec un champ électrique dans le dispositif égal à -U.

On introduit du côté de la fente 4, et fait circuler un flux longitudinal d'air filtré en écoulement non turbulent, dans l'espace entre plaques 2, 3. Le débit d'air filtré est séparé en un débit q 1 entre la fente 4 et la plaque du dessus 2 et un débit q2 entre la fente 4 et la plaque du dessous 3.

L'aérosol est alors introduit par la fente 4, à un débit qo.

Les particules chargées électriquement sont donc soumises au champ électrique E, ce qui a tendance à les attirer vers la plaque supérieure 3, sauf si elles sont trop denses, auquel cas elles auront tendance à se déposer sur la plaque inférieure 2 sous l'action du champ de gravité g.

Ainsi, dans son parcours entre les plaques, toute particule, y compris une fibreuse, va être soumise à ces deux champs de forces antagonistes, champ de gravité g et champ électrique E.

Chaque particule, fibreuse ou non, va donc être soumise à deux vitesses transversales opposées:

- une vitesse ascendante due au champ électrique notée w, telle que $w = Z*E$, où Z est la mobilité électrique de la particule,
- une vitesse descendante due au champ de gravité notée u, telle que $u = \tau *g$, où $\tau$ est le temps de relaxation de la particule. et g le champ de gravité terrestre.

La trajectoire d'une particule résultera donc de la composition de ces deux vitesses transversales u et w d'une part, de sa vitesse longitudinale v dans l'écoulement non turbulent d'autre part.

Pour une géométrie et un débit fixés, une valeur appropriée du champ E peut donc diriger les fibres ainsi que les fines particules très électriquement mobiles et non soumises à la gravité, dans la partie supérieure de l'espace entre plaques 2, 3, et diriger les particules non fibreuses en partie inférieure 7 de cet espace, surtout les grosses particules, peu mobiles électriquement, et soumises à la gravité.

On peut donc récupérer dans le canal de sortie 6, les fibres séparées et portées par le flux d'air au débit Q1.

En parallèle, on peut récupérer dans le canal de sortie 7, les fibres présentant le facteur de forme le plus faible ou les particules, non fibreuses, portées par le flux d'air au débit Q2.

La somme des débits d'entrée qo, $q_1$ et $q_2$ égale la somme des débits de sortie $Q_1$ et $Q_2$.

Ainsi séparées des fibres, les grosses particules ne peuvent plus masquer le dénombrement des fibres pour l'application mesure de fibres d'amiante.

Les inventeurs ont corroboré par calculs présentés ci-après la séparation entre fibres et particules non fibreuses par l'action conjuguée de force électrique résultant d'un champ E créé entre plaques planes, et champ de gravité terrestre g.

Dans les calculs, on considère le cas de fibres de carbone, précisément celles qui ont été utilisées dans les expériences mentionnées dans la publication [3], de diamètre 3,74 $\mu$m, chargées par diffusion d'ions unipolaires avec un produit Ni*t = 1,9.10[7] s/cm[3]. L'avantage d'utiliser des fibres de carbone est que ses caractéristiques électriques ont été particulièrement bien étudiées par les auteurs de la publication. Un autre avantage est aussi de se placer volontairement dans des conditions favorables pour mettre en évidence l'action du champ de gravité par rapport à l'action du champ électrique.

La trajectoire d'une particule s'obtient en composant les vitesses u, v, w où :

$$u = \tau^*g$$

$$w = Z^*E,$$

soit

$$w \text{ - } u = \frac{dz}{dt} = Z.E - \tau.g \qquad (1)$$

$$v = \frac{dx}{dt} = \frac{3}{2} * \frac{Q}{l*h} * \left(1 - 4 * \frac{z^2}{h^2}\right) \qquad (2)$$

avec

$\tau$ représente le temps de relaxation d'une particule, en seconde (s)
g l'accélération de la pesanteur, en m/s[2] ;
Z la mobilité électrique de la particule, en m[2]/(V*s);
E le champ électrique en V/m ;
Q le débit d'air d'entraînement de la particule en m[3]/s ;
l la largeur de canal de circulation du flux d'air ;
h la hauteur de circulation du flux d'air.

En éliminant dt, dans les équations (1) et (2), on parvient à

$$\frac{3}{2} * \frac{Q}{l*h} * \left(1 - 4 * \frac{z^2}{h^2}\right) * dz = (Z * E - \tau * g) * dx$$

Soit en réalisant l'intégration

$$\frac{3}{2} * \frac{Q}{l*h} * \int_0^z \left(1 - 4 * \frac{z^2}{h^2}\right) * dz = \int_0^x (Z * E - \tau * g) * dx$$

D'où l'équation finale (3) comme suit :

$$\frac{3}{2} * \frac{Q}{l*h} * \left(z - \frac{4}{3} * \frac{z^3}{h^2}\right) = (Z * E - \tau * g) * x$$

Pour calculer le temps de relaxation $\tau_f$ d'une fibre, on utilise l'équation (4) :

$$\tau_f = \frac{\rho * d'^2}{18 * \eta * \chi_f}$$

avec :

$\rho$ représente la masse volumique égale à $1,832.10^3$ kg/m³ pour des fibres de carbone ;
d'= $d * (1,5 * \beta)^{1/3}$ et d est égal à 3,74 $\mu$m ;
$\eta$ représente la viscosité de l'air égale à $1,81*10^{-5}$ Pa.s ;
$\chi_f$ est le facteur de forme dépendant de $\beta$ ;
$\beta$ est l'élancement (rapport entre longueur et diamètre de fibres).

En prenant en compte les données expérimentales de la publication [3] et d'après l'équation (4), on obtient le tableau 1 ci-dessous des caractéristiques des fibres:

| $\beta$ | Xf | $Z_f$ en m²/(V*s ) | $\tau_f$ en s |
|---|---|---|---|
| 10 | 1,269 | $7,97*10^{-8}$ | $3,77*10^{-4}$ |
| 20 | 1,541 | $11,27*10^{-8}$ | $4,93*10^{-4}$ |

On précise que les données expérimentales utilisées sont valables pour le produit Ni *t égal à $1,9*10^{13}$ ions*s/m³, où Ni est la concentration en ions unipolaires et t le temps de séjour.

Pour calculer le champ électrique E qui permet à des fibres de facteur $\beta$ égal à 20, d'arriver en haut de l'espace entre plaques, i.e. le plus proche de la plaque supérieure, avec x = L, on utilise l'équation (3) pour $z = \frac{h}{2}$, ce qui donne :

$$E = \frac{\dfrac{Q}{2*l*L} + \tau_f * g}{Z_f}$$

avec Q représentant le débit égal à 2 litre par min ; 1 = 5cm, L = 20cm, $\tau_f = 4,93*10^{-4}$s, $Z_f = 11,27*10^{-8}$ m²/(V*s ) et g = 9,81 m/s², on obtient une valeur E de champ électrique égale à $5,76*10^4$ V/m.

En reportant cette valeur dans l'équation (3) ci-avant, on dispose de tous les éléments pour trouver la trajectoire des fibres de facteur $\beta$ égal à 20.

Pour la même valeur E, on peut trouver également tous les éléments pour trouver la trajectoire des fibres de facteur $\beta$ égal à 10.

On peut procéder et faire les mêmes calculs pour une sphère équivalente en volume (les indices « se » ci-après correspondant à une sphère équivalente).

Soit $d_{se}$ le diamètre volumique d'une sphère équivalent à une fibre de diamètre d et de longueur $l_f$, alors on a la relation :

$$\frac{\pi * d^2}{4} * lf = \frac{4}{3} * \pi * (\frac{dse}{2})^3$$

Alors, avec β qui est le rapport entre longueur lf et diamètre d de fibre, on a l'équation (4) :

$$d_{se} = d * (1,5 * \beta)^{1/3}.$$

Pour le calcul du temps de relaxation de la sphère on utilise l'équation (5) : $\tau_{se} = \frac{\rho * d_{se}^2}{18 * \eta * \chi_{se}}$ avec $\chi_{se}$ égal à 1.

Pour le calcul de mobilité électrique des sphères, la publication [1] permet de la déterminer pour un produit Ni *t égal à $10^{13}$ ions*s/m³.

Il est possible d'extrapoler pour se placer dans les conditions calculées pour les fibres soit avec Ni *t égal à $1,9*10^{13}$ ions*s/m³.

Pour ce faire, on utilise l'expression (15.24) de la page 325 de la publication [1], ce qui permet de trouver un coefficient multiplicateur égal à 1,083.

On obtient donc le tableau 2 ci-dessous des caractéristiques des sphères équivalentes:

| β | $d_{se}$ en μm | $\chi_{se}$ | $Z_{se}$ en m²/(V*s ) | $\tau_{se}$ en s |
|----|------|---|-----------|-----------|
| 10 | 9.24 | 1 | $4,52*10^{-8}$ | $4,78*10^{-4}$ |
| 20 | 11.63 | 1 | $4,48*10^{-8}$ | $7,59*10^{-4}$ |

La trajectoire de ces deux types de particules, i.e. fibres et sphères équivalentes est illustrée figure 3 respectivement pour β = 20 et β = 10.

Il ressort de cette figure 3 que la séparation entre ce type de fibres et leurs particules sphériques équivalentes, en termes de volume et de masse, est donc clairement établie.

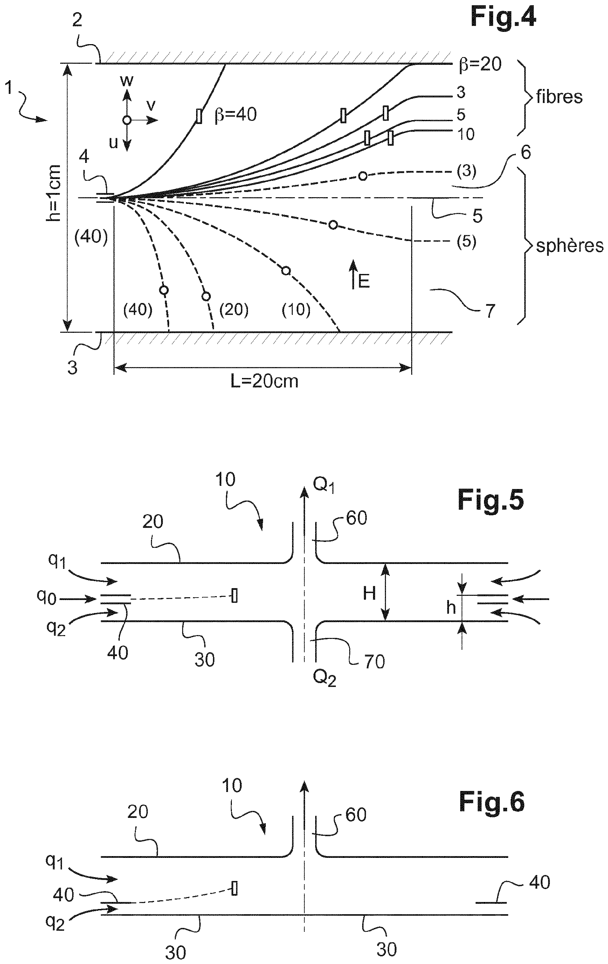

La figure 4 illustre les trajectoires pour des valeurs de β respectivement égales à 3, 5, 10, 20 et 40.

Les figures 5 et 6 montrent des variantes de dispositif 10 dans lesquels les plaques planes rectangulaires sont remplacées par des plaques pleines circulaires 20, 30 entre lesquelles l'aérosol et l'air filtré sont injectés et circulent en co-courant selon un écoulement radial de l'extérieur vers le centre des plaques 20, 30.

Dans la variante de la figure 5, l'entrée est une fente circulaire agencée 40 dans l'espace entre plaques 20, 30. La sortie par laquelle les fibres sont récupérées est un conduit 60 réalisé dans le prolongement axial dans la plaque circulaire 20 du dessus. Les particules non fibreuses tombées par gravité sont quant à elles évacuées par un conduit 70 réalisé dans le prolongement axial dans la plaque circulaire 30 du dessous.

Dans la variante de la figure 6, la fente d'entrée 40 est délimitée avec la plaque circulaire du dessous 30 et on réalise une récupération uniquement des fibres par le conduit axial 60 sur la plaque du dessus 20.

On peut envisager d'agencer des dispositifs selon les variantes des figures 5 et 6 en amont d'appareils à lecture directe, les grosses particules non fibreuses étant éliminées.

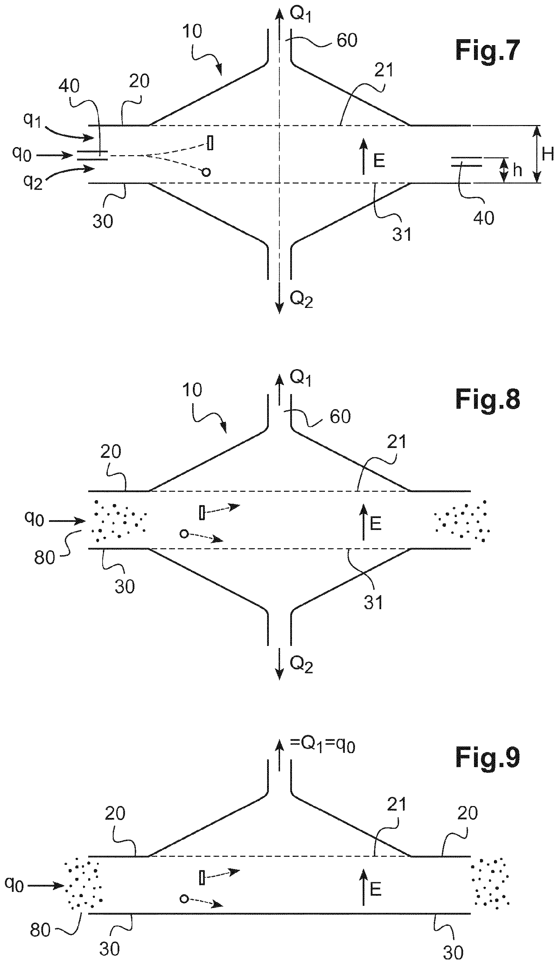

Les figures 7 à 9 montrent des variantes, dans lesquelles on injecte et on fait circuler l'aérosol et l'air filtré qui circulent également en co-courant selon un écoulement radial de l'extérieur vers le centre mais, au lieu de récupérer les fibres séparées dans un conduit 60 et le cas échéant les particules non fibreuses dans un conduit 70 comme dans les figures 5 et 6, on vient collecter les particules séparées sur une ou deux membranes filtrantes 21, 31 qui sont électriquement conductrices (ou isolantes, mais supportées par des grilles conductrices).

Dans la variante de la figure 7, on agence une membrane filtrante 21 en tant que surface de collecte du dessus et une membrane filtrante 31 en tant que surface de collecte du dessous. Le champ électrique E est appliqué entre les deux membranes filtrantes 21,31 du bas vers le haut. L'aérosol est injecté radialement dans une fente circulaire 40 agencée dans l'espace entre membranes 21, 31. Les fibres séparées sont collectées sur la membrane du dessus 21, l'air les transportant étant évacué par un conduit de sortie 60 réalisé dans le prolongement axial au-dessus de la membrane filtrante 21. Les particules non fibreuses tombées par gravité sont collectées sur la membrane du dessous 31, l'air les transportant étant évacué par un conduit de sortie 70 réalisé dans le prolongement axial au-dessous de la membrane filtrante 31. Comme illustré, les conduits 60, 70 sont réalisés en bout d'un tronc de cône plein respectivement au-dessus de la membrane filtrante supérieure 21 et au-dessous de celle inférieure 31.

Le dispositif de la figure 8 est similaire à celui de la figure 7, à ceci près que l'aérosol est injecté radialement sur toute la hauteur de l'espace 80 entre les membranes 21, 31.

Le dispositif de la figure 9 comprend une seule membrane filtrante 21 pour la collecte des fibres séparées avec injection radiale sur toute la hauteur de l'espace 80 entre la membrane 21 et le disque plein 30.

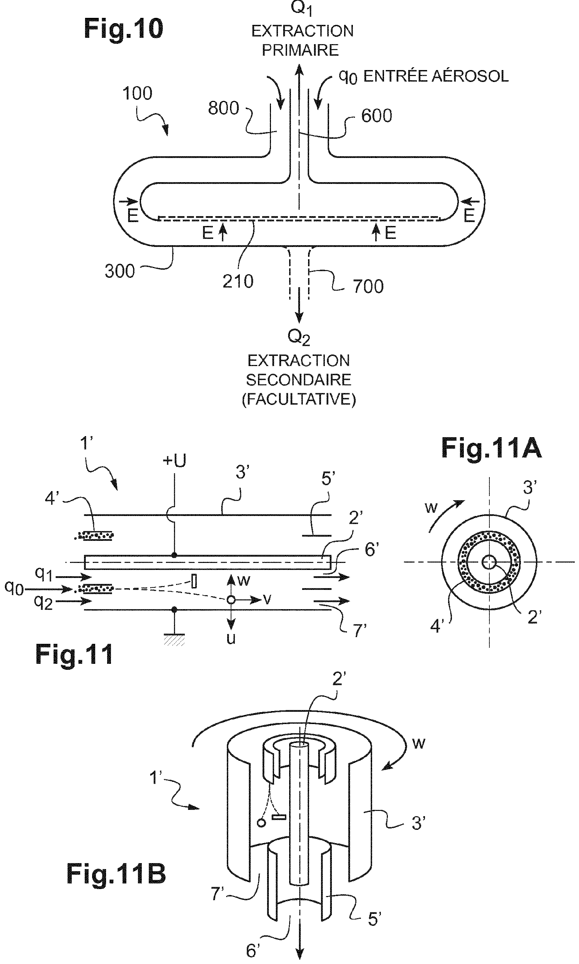

La figure 10 montre une variante de dispositif 100, qui permet d'augmenter la séparation des fibres par la force électrique et la séparation des grosses particules non fibreuses par le champ de gravité.

Dans cette variante, les surfaces planes entre lesquelles est établi le champ électrique sont constituées par la face de dessous 210, du disque 200, et la face de dessus du disque 300 agencés à l'horizontal coaxialement l'un dans l'autre en définissant entre eux un espace d'épaisseur constante.

Chacun de ces deux disques 200, 300 est évidé et à bord circulaire concave. La face du dessous 210 du disque intérieur 200 est au moins en partie une membrane filtrante.

L'aérosol de particules chargées est ici introduit par un conduit 800 réalisé dans le prolongement axial du disque extérieur 300 sur le dessus de celui-ci puis circule dans l'espace entre disques 200, 300.

Les fibres séparées sont collectées sur la membrane 210, l'air les transportant étant évacué par un conduit de sortie 600 réalisé dans le prolongement axial au-dessus de la membrane filtrante 210. Le conduit de sortie 600 peut être coaxial au conduit d'entrée 800.

De manière facultative, les particules non fibreuses tombées par gravité peuvent être évacuées par l'air dans un conduit de sortie 700 réalisé dans le prolongement axial du disque extérieur 300 sur le dessous de celui-ci.

Les figures 11, 11A et 11B montrent un dispositif 1' selon u l'invention qui met en oeuvre l'action conjuguée de forces électrique et centrifuge pour la séparation des fibres.

Plus précisément, le dispositif 1' comprend tout d'abord deux cylindres coaxiaux 2', 3' électriquement conducteurs.

Ces cylindres 2', 3' sont de préférence agencés à la verticale. Un tel agencement permet de ne pas rajouter de force de gravité qui pourrait perturber la force centrifuge à laquelle sont soumises les particules.

Une fente cylindrique 4' est agencée dans l'espace entre cylindres 2',3'.

Un tube cylindrique de sortie 5' est agencé entre les deux cylindres 2', 3'.

On génère un champ électrique uniforme E d'intensité constante entre les cylindres 2', 3', le champ E étant dirigé radialement de l'extérieur vers l'intérieur. Pour ce faire, par exemple, le cylindre extérieur 3' est porté au potentiel zéro, tandis que le cylindre intérieur 2' est au potentiel +U.

On met en rotation à une vitesse de rotation $\overline{\omega,}$ les cylindres 2', 3' ainsi que le tube cylindrique de sortie 5'.

Simultanément, on introduit du côté de la fente 4', et fait circuler un flux longitudinal d'air filtré en écoulement non turbulent, dans l'espace entre cylindres 2',3'. Le débit d'air filtré est séparé en un débit q1 entre la fente 4' et le cylindre intérieur 2' et un débit q2 entre la fente 4' et le cylindre extérieur 3'.

L'aérosol est alors introduit par la fente 4', à un débit qo.

Les fibres chargées électriquement ont une mobilité électrique plus grande que les particules sphériques équivalentes, le champ électrique E a donc tendance à les attirer vers le cylindre intérieur 2' puisque leur vitesse selon la composante w est supérieur à celle selon la composante u.

Ainsi, le débit Q1 est enrichi en fibres et appauvri en particules non fibreuses.

A contrario, les particules non fibreuses sont plus soumises à la force centrifuge que les fibres et ont donc tendance à s'écarter du cylindre intérieur pour se rapprocher du cylindre extérieur 3'.

Pour une géométrie et un débit fixés, une valeur appropriée du champ E et de la vitesse de rotation W, on peut donc diriger les fibres ainsi que les fines particules très électriquement mobiles et non soumises à la force centrifuge, dans la partie intérieure de l'espace entre cylindres 2', 3', et diriger les particules non fibreuses en partie extérieure de cet espace, surtout les grosses particules, peu mobiles électriquement, et soumises à la force centrifuge.

On peut donc récupérer dans le canal 6' délimité par l'intérieur du tube de sortie 5' et le cylindre intérieur 2', les fibres séparées et portées par le flux d'air au débit Q1.

En parallèle, on peut récupérer dans le canal de sortie 7 délimité par l'extérieur du tube de sortie 5' et le cylindre extérieur 3', les grosses particules, non fibreuses, portées par le flux d'air au débit Q2.

La somme des débits d'entrée qo, $q_1$ et $q_2$ égale la somme des débits de sortie $Q_1$ et $Q_2$.

La figure 12 montre une variante de dispositif 100', qui permet d'augmenter la séparation des fibres par la force électrique et la séparation des grosses particules non fibreuses par la force centrifuge et conjointement avec la force de gravité.

Dans cette variante, les surfaces planes entre lesquelles est établi le champ électrique sont constituées par les faces de dessous 210', 310' de deux disques 200', 300' agencés à l'horizontal coaxialement l'un dans l'autre en définissant entre eux un espace de section constante.

Chacun de ces deux disques 200', 300' est à bord circulaire concave et le disque extérieur 300' est évidé.

Les faces du dessous 210', 310' des disques 200, 300 sont pleines.

Un tube de sortie 500' est réalisé dans le prolongement axial de la face de dessous 310' du disque extérieur 300'. Ce tube de sortie 500' est constitué d'une première portion 510' séparant l'espace entre disques en deux, prolongée d'une portion cylindrique 520' selon l'axe de révolution des disques.

L'aérosol de particules chargées est ici introduit par un conduit 800' réalisé dans le prolongement axial du disque extérieur 300' sur le dessus de celui-ci puis circule dans l'espace entre disques 200', 300'.

On met en rotation à une vitesse de rotation W, les disques 200', 300' ainsi que le tube cylindrique de sortie 500'.

Les fibres séparées sont récupérées avec l'air les transportant dans le conduit de sortie 600' délimité par l'intérieur du tube 500'.

Les particules non fibreuses soumises aux forces, à la fois centrifuge et de gravité, sont évacuées par l'air dans un conduit de sortie 700' réalisé autour du tube 500'.

La figure 13 montre une variante du dispositif 100' de la figure 12 : ici un tube d'entrée 900' permet l'ajout d'un débit d'air filtré q1. L'introduction de cet air filtré q1 permet d'augmenter la sélectivité. De plus, cela permet aussi de réduire l'épaisseur de la fente d'injection d'aérosols 400', et aussi réduire l'épaisseur de la fente de collecte 600'.

La figure 14 correspond à la figure 13 mais avec une configuration des éléments entre lesquels le champ est établi sous la forme de sphères 200', 300' concentriques. L'avantage de cette variante selon la figure 14 est qu'elle permet d'avoir un champ électrique constant.

La figure 15 est une variante de dispositif centrifuge, dans laquelle un débit d'air filtré est également introduit dans le conduit 900'. Selon cette variante, les éléments 200', 300' ont une géométrie cylindrique, ce qui a pour avantage de définir une zone de séparation des fibres par force centrifuge qui est plus étendue.

D'autres variantes et améliorations peuvent être apportées sans pour autant sortir du cadre de l'invention.

Ainsi, si dans les modes de réalisation illustrés le débit Q1 est montré égal à celui de Q2 égal au débit total divisé par deux Q/2, on peut très bien envisager d'avoir Q1 différent de Q2 et de Q/2.

Il en va de même sur q0, q1 et q2 qui peuvent être différents les uns des autres et également différent de q/3.

Par ailleurs, si dans l'ensemble des exemples illustrés, les surfaces planes de révolution sont agencées coaxialement l'une dans l'autre et définissent un espace d'épaisseur constante, on peut très bien envisager de mettre en oeuvre l'invention avec des surfaces de révolution non parallèles/coaxiales et donc avec un espace d'épaisseur variable.

L'invention n'est pas limitée aux exemples qui viennent d'être décrits; on peut notamment combiner entre elles des caractéristiques des exemples illustrés au sein de variantes non illustrées. La portée de l'invention est définie par les revendications annexées.

### Références citées

[1]: W. Hinds, « Aerosol Technology », 2nd Edition, 1999.
[2]: Zebel G., Hochrainer D., Boose C., "A sampling method with separated deposition of fibres and otherparticles", J. Aerosol Sci., 8:205-213 (1977).
[3]: Chen B.T., Yeh H.C., Hobbs C.H., "Size Classification of Carbon Fiber Aerosols", Aerosol Sci. Technol., 19:109-120 (1993).
[4]: Chen B.T., Yeh H.C., Johnson N.F., "Design and use of a virtual impactor and an electrical classifier for generation of test fiber aerosols with narrow size distributions", J. Aerosol Sci., 27(1):83-94 (1996).
[5]: Han R.J., Moss O.R., Wong B.A., « Airborne Fiber Separation by Electrophoresis and Dielectrophoresis: Theory and Design Considerations », Aerosol Sci. Technol., 21:241-258 (1994).
[6]: Griffiths W.D., « The selective separation of aerosol particles of different shapes », J. Aerosol Sci., 18(6):761-763 (1987).
[7]: Griffiths W.D., « The shape selective sampling of fibrous aerosols », J. Aerosol Sci., 19(6):703-713 (1988).
[8]: Baron P.A., Deye G.J., Fernback J., « Length separation offibers », Aerosol Sci. Technol., 21:179-192 (1994).
[9]: Lilienfeld, P. "Rotational Electrodynamics of Airborne Fibers", J. Aerosol Sci. 4: 315-322 (1985).
[10]:Deye G.J., Gao P., Baron P.A., Fernback J., «Performance Evaluation of a Fiber Length Classifier», Aerosol Sci. Technol., 30:420-437 (1999).
[11]: Dubey P., Ghia U., Turkevich L.A., «Numerical investigation of sheath and aerosol flows in the flow combination section of a Baron fiber classifier», Aerosol Sci. Technol., 48:896-905 (2014).
[12]: Ehara, K., Hagwood, C., Coakley, K.J., « Novel method to Classify Aerosol Particles According to Their Mass-to-Charge Ratio », Aerosol Particle Mass Analyzer, J. Aerosol Sci, 27:217-234 (1996).
[13]: Olfert, J.S., Collings, N. « New Method for Particle Mass Classification: the Couette Centrifugal Particle Mass Analyser », J. Aerosol Sci, 36:1338-1352 (2005).

**Revendications**

1. Méthode de tri de micro et nano fibres en suspension dans un aérosol susceptible de contenir des fibres de tailles différentes et éventuellement des particules non fibreuses, comprenant les étapes suivantes:

   a/ charge des particules en suspension dans l'aérosol, par diffusion d'ions unipolaires ;
   b/ application d'un champ électrique entre deux surfaces de révolution électriquement conductrices, agencées avec leur axe à la verticale et en définissant entre elles un espace; le champ électrique étant dirigé de la surface extérieure vers la surface intérieure;
   c/ introduction d'un flux d'aérosol depuis une entrée sur le dessus entre les deux surfaces de révolution; l'écoulement du flux d'air étant non turbulent dans l'espace entre surfaces de révolution; le flux d'air circulant depuis une entrée sur le dessus entre les deux surfaces de révolution jusqu'à une sortie sur le dessous, délimité par un tube agencé sur le dessous entre les deux surfaces de révolution;
   c'/ simultanément à l'étape c/, mise en rotation à une vitesse donnée des surfaces de révolution et du tube de sortie ;
   d/ récupération de la partie de flux d'air chargée en fibres et circulant à l'intérieur du tube de sortie; les fibres récupérées dans la partie de flux d'air étant séparées des particules non fibreuses initialement présentes dans l'aérosol et éjectées par la force centrifuge à l'extérieur du tube de sortie.

2. Méthode de tri selon la revendication 1, comprenant en outre une étape d'/ simultanée à l'étape d/, selon laquelle on récupère la partie de flux d'air chargée en particules non fibreuses et circulant à l'intérieur du tube de sortie.

3. Méthode de tri selon la revendication 1 ou 2, les surfaces de révolution ainsi que le tube de sortie étant des cylindres, méthode selon laquelle :

   - l'étape c/ est réalisée par introduction de l'aérosol dans une fente d'entrée agencée dans l'espace entre cylindres et par circulation d'un flux axial d'air filtré introduit de part et d'autre de la fente à co-courant du flux d'aérosol ;
   - l'étape d/ est réalisée par récupération de la partie du flux d'air chargée en fibres à l'intérieur du tube de sortie ;
   - le cas échéant, l'étape d'/ est réalisée par récupération de la partie du flux d'air chargée en particules non fibreuses à l'intérieur du tube de sortie ;

4. Méthode de tri selon la revendication 1 ou 2, les surfaces de révolution étant des disques évidés à bord circulaire concave, agencés à l'horizontal en définissant entre eux un espace; l'entrée étant un conduit réalisé dans le prolongement axial du disque extérieur sur le dessus de celui-ci; le tube de sortie étant constitué d'une première portion séparant l'espace entre disques en deux, prolongée d'une portion cylindrique selon l'axe de révolution; méthode selon laquelle:

   - l'étape c/ est réalisée par introduction de l'aérosol dans le conduit d'entrée;
   - l'étape d/ est réalisée par récupération de la partie du flux d'air chargée en fibres à l'intérieur du tube de sortie ;
   - le cas échéant, l'étape d'/ est réalisée par récupération de la partie du flux d'air chargée en particules non fibreuses à l'intérieur du tube de sortie.

5. Dispositif pour la mise en oeuvre de la méthode de séparation selon l'une des revendications 1 à 4, comprenant :

   - deux surfaces de révolution, électriquement conductrices, avec leur axe à la verticale et en définissant entre eux un espace;
   - des moyens pour appliquer un champ électrique entre les deux surfaces, le champ étant dirigé de la surface extérieure vers la surface intérieure;
   - des moyens pour introduire un flux d'aérosol de fibres en suspension dans un aérosol susceptible de contenir des particules non fibreuses, depuis une entrée sur le dessus entre les deux surfaces de révolution;
   - des moyens pour mettre en rotation à une vitesse donnée les deux surfaces de révolution ainsi qu'un tube de sortie agencé coaxialement sur le dessous entre les deux surfaces de révolution ;
   - des moyens pour récupérer la partie de flux d'air chargée en fibres, à l'intérieur du tube de sortie.

6. Dispositif selon la revendication 5, comprenant en outre des moyens pour récupérer la partie du flux d'air chargée en particules non fibreuses à l'intérieur du tube de sortie.

7. Dispositif selon la revendication 5 ou 6, les deux surfaces de révolution étant des cylindres coaxiaux, l'entrée étant une fente agencée dans l'espace entre cylindres, le tube de sortie étant un cylindre.

8. Dispositif selon la revendication 5 ou 6, les deux surfaces de révolution étant deux disques à bord circulaire concave, agencés à l'horizontal coaxialement l'un dans l'autre en définissant entre eux un espace; l'entrée étant un conduit réalisé dans le prolongement axial du disque extérieur sur le dessus de celui-ci; le tube de sortie étant constitué d'une première portion séparant l'espace entre disques en deux, prolongée d'une portion cylindrique selon l'axe de révolution.

9. Utilisation d'une méthode selon l'une des revendications 1 à 4 ou d'un dispositif selon l'une des revendications 5 à 8 pour la détection et la mesure de concentration en nombre de fibres, en particulier de fibres d'amiantes, dans l'air, notamment dans un environnement empoussiéré.

10. Utilisation selon la revendication 9 pour la détection et la mesure de concentrations en fibres courtes d'amiante (FCA) et/ou en fibres fines d'amiante (FFA).

**Patentansprüche**

1. Verfahren zum Sortieren von Mikro- und Nanofasern, die in einem Aerosol suspendiert sind, das Fasern unterschiedlicher Größen und gegebenenfalls nichtfaserige Teilchen enthalten kann, umfassend die folgenden Schritte:

   a/ Laden der im Aerosol suspendierten Teilchen durch Diffusion von unipolaren Ionen;
   b/ Anlegen eines elektrischen Felds zwischen zwei elektrisch leitende Rotationsflächen, die mit ihrer Achse in der Vertikalen angeordnet sind und zwischen sich einen Raum definieren; wobei das elektrische Feld von der äußeren Fläche zur inneren Fläche gerichtet ist;
   c/ Einleiten eines Aerosolstroms von einem Einlass an der Oberseite aus zwischen die beiden Rotationsflächen; wobei die Strömung des Luftstroms in dem Raum zwischen Rotationsflächen nicht turbulent ist; wobei der Luftstrom von einem Einlass an der Oberseite aus zwischen den beiden Rotationsflächen bis zu einem Auslass an der Unterseite zirkuliert, begrenzt durch ein Rohr, das an der Unterseite zwischen den beiden Rotationsflächen angeordnet ist;
   c'/ gleichzeitig zu Schritt c/ Indrehungversetzen der Rotationsflächen und des Auslassrohrs mit einer gegebenen Geschwindigkeit;
   d/ Rückgewinnen des Luftstromteils, der mit Fasern beladen ist und im Inneren des Auslassrohrs zirkuliert; wobei die in dem Luftstromteil zurückgewonnenen Fasern von den nichtfaserigen Teilchen getrennt werden, die anfänglich im Aerosol vorhanden waren und durch die Zentrifugalkraft aus dem Auslassrohr ausgestoßen werden.

2. Sortierverfahren nach Anspruch 1, umfassend ferner gleichzeitig zum Schritt d/ einen Schritt d'/, gemäß dem der Luftstromteil zurückgewonnen wird, der mit nichtfaserigen Teilchen beladen ist und im Inneren des Auslassrohrs zirkuliert.

3. Sortierverfahren nach Anspruch 1 oder 2, wobei die Rotationsflächen sowie das Auslassrohr Zylinder sind, wobei gemäß dem Verfahren:

   - der Schritt c/ durch Einleiten des Aerosols in einen Einlassschlitz, der in dem Raum zwischen Zylindern angeordnet ist, und durch Zirkulation eines axialen Stroms gefilterter Luft, der zu beiden Seiten des Schlitzes im Gleichstrom mit dem Aerosolstrom eingeleitet wird, ausgeführt wird;
   - der Schritt d/ durch Rückgewinnen des mit Fasern beladenen Teils des Luftstroms im Innern des Auslassrohrs ausgeführt wird;
   - der Schritt d'/ gegebenenfalls durch Rückgewinnen des mit nichtfaserigen Teilchen beladenen Teils des Luftstroms im Innern des Auslassrohrs ausgeführt wird;

4. Sortierverfahren nach Anspruch 1 oder 2, wobei die Rotationsflächen ausgehöhlte Scheiben mit konkavem kreisförmigem Rand sind, die in der Horizontalen angeordnet sind und dabei zwischen sich einen Raum definieren; wobei der Einlass eine Leitung ist, die in der axialen Verlängerung der äußeren Scheibe an deren Oberseite ausgeführt ist; wobei das Auslassrohr aus einem ersten Abschnitt gebildet wird, der den Raum zwischen Scheiben in zwei Hälften teilt und mit einem zylindrischen Abschnitt gemäß der Rotationsachse verlängert wird, wobei bei dem Verfahren:

- der Schritt c/ durch Einleiten des Aerosols in die Einlassleitung ausgeführt wird;
- der Schritt d/ durch Rückgewinnen des mit Fasern beladenen Teils des Luftstroms im Innern des Auslassrohrs ausgeführt wird;
- der Schritt d'/ gegebenenfalls durch Rückgewinnen des mit nichtfaserigen Teilchen beladenen Teils des Luftstroms im Innern des Auslassrohrs ausgeführt wird.

5. Vorrichtung zur Durchführung des Sortierverfahrens nach einem der Ansprüche 1 bis 4, umfassend:

- zwei elektrisch leitende Rotationsflächen mit ihrer Achse in der Vertikalen und zwischen sich einen Raum definierend;
- Mittel zum Anlegen eines elektrischen Felds zwischen den beiden Flächen, wobei das Feld von der äußeren Fläche zur inneren Fläche gerichtet ist;
- Mittel zum Einleiten eines Aerosolstroms mit Fasern, die in einem Aerosol suspendiert sind, das nichtfaserige Teilchen enthalten kann, von einem Einlass an der Oberseite aus zwischen die beiden Rotationsflächen;
- Mittel zum Indrehungversetzen der beiden Rotationsflächen sowie eines Auslassrohrs, das koaxial an der Unterseite zwischen den beiden Rotationsflächen angeordnet ist, mit einer gegebenen Geschwindigkeit;
- Mittel zum Rückgewinnen des mit Fasern beladenen Luftstromteils im Innern des Auslassrohrs.

6. Vorrichtung nach Anspruch 5, umfassend ferner Mittel zum Rückgewinnen des mit nichtfaserigen Teilchen beladenen Teils des Luftstroms im Inneren des Auslassrohrs.

7. Vorrichtung nach Anspruch 5 oder 6, wobei die beiden Rotationsflächen koaxiale Zylinder sind, wobei der Einlass ein Schlitz ist, der in dem Raum zwischen Zylindern angeordnet ist, wobei das Auslassrohr ein Zylinder ist.

8. Vorrichtung nach Anspruch 5 oder 6, wobei die beiden Rotationsflächen Scheiben mit konkavem kreisförmigem Rand sind, die in der Horizontalen koaxial ineinander angeordnet sind und dabei zwischen sich einen Raum definieren; wobei der Einlass eine Leitung ist, die in der axialen Verlängerung der äußeren Scheibe an deren Oberseite ausgeführt ist; wobei das Auslassrohr aus einem ersten Abschnitt gebildet wird, der den Raum zwischen Scheiben in zwei Hälften teilt und mit einem zylindrischen Abschnitt gemäß der Rotationsachse verlängert wird.

9. Verwendung eines Verfahrens nach einem der Ansprüche 1 bis 4 oder einer Vorrichtung nach einem der Ansprüche 5 bis 8 zur Detektion und Messung der zahlenmäßigen Konzentration von Fasern, insbesondere von Asbestfasern, in der Luft, insbesondere in einer staubigen Umgebung.

10. Verfahren nach Anspruch 9 zur Detektion und Messung von Konzentrationen kurzer Asbestfasern (FCA) und/oder feiner Asbestfasern (FFA).

**Claims**

1. Method for sorting micro- and nano-fibers in suspension in an aerosol likely to contain fibers of different sizes and possibly non-fibrous particles, comprising the following steps:

a/ charging of the particles in suspension in the aerosol, by unipolar ion diffusion;
b/ application of an electrical field between two electrically conductive surfaces of revolution, arranged with their axis vertical and defining a space between them; the electrical field being directed from the outer surface to the inner surface;
c/ introduction of an aerosol flow from an input on top between the two surfaces of revolution; the flow of the air flow being non-turbulent in the space between surfaces of revolution; the air flow circulating from an input on top between the two surfaces of revolution to an output below, delimited by a tube arranged below between the two surfaces of revolution;
c'/ simultaneously with the step c/, rotation at a given velocity of the surfaces of revolution and of the output tube;
d/ recovery of the part of air flow charged with fibers and circulating inside the output tube; the fibers recovered in the part of air flow being separated from the non-fibrous particles initially present in the aerosol and ejected by the centrifugal force out of the output tube.

2. Sorting method according to Claim 1, further comprising a step d'/ simultaneous with the step d/, whereby the part of air flow charged with non-fibrous particles and circulating inside the output tube is recovered.

3. Sorting method according to Claim 1 or 2, the surfaces of revolution and the output tube being cylinders, whereby:

   - the step c/ is performed by introduction of the aerosol into an input slit arranged in the space between cylinders and by circulation of an axial flow of filtered air introduced on either side of the slit co-current with the aerosol flow;
   - the step d/ is performed by recovery of the part of the air flow charged with fibers inside the output tube;
   - if necessary, the step d'/ is performed by recovery of the part of air flow charged with non-fibrous particles inside the output tube;

4. Sorting method according to Claim 1 or 2, the surfaces of revolution being openwork discs with concave circular edge, arranged horizontally, defining a space between them; the input being a duct produced in the axial extension of the outer disc on top thereof; the output tube being composed of a first portion separating the space between discs into two, prolonged by a cylindrical portion along the axis of revolution; a method whereby:

   - the step c/ is performed by introduction of the aerosol into the input duct;
   - the step d/ is performed by recovery of the part of air flow charged with fibers inside the output tube;
   - if necessary, the step d'/ is performed by recovery of the part of the air flow charged with non-fibrous particles inside the output tube.

5. A device for implementing the separation method according to one of Claims 1 to 4, comprising:

   - two electrically conductive surfaces of revolution, with their axis vertical and defining a space between them;
   - means for applying an electrical field between the two surfaces, the field being directed from the outer surface to the inner surface;
   - means for introducing an aerosol flow of fibers in suspension in an aerosol likely to contain non-fibrous particles, from an input on top between the two surfaces of revolution;
   - means for rotating at a given velocity the two surfaces of revolution and an output tube arranged coaxially below between the two surfaces of revolution;
   - means for recovering the part of air flow charged with fibers, inside the output tube.

6. Device according to Claim 5, further comprising means for recovering the part of the air flow charged with non-fibrous particles inside the output tube.

7. Device according to Claim 5 or 6, the two surfaces of revolution being coaxial cylinders, the input being a slit arranged in the space between cylinders, the output tube being a cylinder.

8. Device according to Claim 5 or 6, the two surfaces of revolution being two disks with concave circular edge, arranged horizontally coaxially to one another defining a space between them; the input being a duct produced in the axial extension of the outer disk on top thereof; the output tube being composed of a first portion separating the space between disks into two, prolonged by a cylindrical portion along the axis of revolution.

9. Use of a method according to one of Claims 1 to 4 or of a device according to one of Claims 5 to 8 for the detection and measurement of concentration in terms of number of fibers, in particular of asbestos fibers, in air, notably in a dusty environment.

10. Use according to Claim 9 for the detection and measurement of concentrations of short asbestos fibers (SAF) and/or of fine asbestos fibers (FAF).

Fig.1

Fig.2

Fig.3

Fig.4

Fig.5

Fig.6

**Fig.7**

**Fig.8**

**Fig.9**

**Fig.10**

$Q_1$
EXTRACTION
PRIMAIRE

$q_0$ ENTRÉE AÉROSOL

100

800

600

E

E

E ↑

↑ E

E

300

210

700

$Q_2$
EXTRACTION
SECONDAIRE
(FACULTATIVE)

**Fig.11A**

1'

+U

3'

5'

4'

2'

6'

$q_0$
$q_1$
$q_2$

w

v

u

7'

w

3'

2'

4'

**Fig.11**

2'

w

1'

3'

7'

5'

6'

**Fig.11B**

Fig.12

Fig.13

Fig.14

Fig.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7931734 B2
- WO 2013058429 A1
- KR 101558480 B1
- KR 101322689 B1
- US 6012343 B
- JP 07055689 B

**Littérature non-brevet citée dans la description**

- **W. HINDS.** Aerosol Technology. 1999
- **ZEBEL G. ; HOCHRAINER D. ; BOOSE C.** A sampling method with separated deposition of fibres and otherparticles. *J. Aerosol Sci.,* 1977, vol. 8, 205-213
- **CHEN B.T. ; YEH H.C. ; HOBBS C.H.** Size Classification of Carbon Fiber Aerosols. *Aerosol Sci. Technol.,* 1993, vol. 19, 109-120
- **CHEN B.T. ; YEH H.C. ; JOHNSON N.F.** Design and use of a virtual impactor and an electrical classifier for generation of test fiber aerosols with narrow size distributions. *J. Aerosol Sci.,* 1996, vol. 27 (1), 83-94
- **HAN R.J. ; MOSS O.R. ; WONG B.A.** Airborne Fiber Separation by Electrophoresis and Dielectrophoresis: Theory and Design Considerations. *Aerosol Sci. Technol.,* 1994, vol. 21, 241-258
- **GRIFFITHS W.D.** The selective separation of aerosol particles of different shapes. *J. Aerosol Sci.,* 1987, vol. 18 (6), 761-763
- **GRIFFITHS W.D.** The shape selective sampling of fibrous aerosols. *J. Aerosol Sci.,* 1988, vol. 19 (6), 703-713
- **BARON P.A. ; DEYE G.J. ; FERNBACK J.** Length separation offibers. *Aerosol Sci. Technol.,* 1994, vol. 21, 179-192
- **LILIENFELD, P.** Rotational Electrodynamics of Airborne Fibers. *J. Aerosol Sci.,* 1985, vol. 4, 315-322
- **DEYE G.J. ; GAO P. ; BARON P.A. ; FERNBACK J.** Performance Evaluation of a Fiber Length Classifier. *Aerosol Sci. Technol.,* 1999, vol. 30, 420-437
- **DUBEY P. ; GHIA U. ; TURKEVICH L.A.** Numerical investigation of sheath and aerosol flows in the flow combination section of a Baron fiber classifier. *Aerosol Sci. Technol.,* 2014, vol. 48, 896-905
- **EHARA, K. ; HAGWOOD, C. ; COAKLEY, K.J.** Novel method to Classify Aerosol Particles According to Their Mass-to-Charge Ratio. *Aerosol Particle Mass Analyzer, J. Aerosol Sci,* 1996, vol. 27, 217-234
- **OLFERT, J.S. ; COLLINGS, N.** New Method for Particle Mass Classification: the Couette Centrifugal Particle Mass Analyser. *J. Aerosol Sci,* 2005, vol. 36, 1338-1352